# EUROPEAN PATENT APPLICATION

(11) **EP 3 006 256 A1**
(43) Date of publication of application: **13.04.2016**
(21) Application number: 15188987.0
(22) Date of filing: 08.10.2015
(51) Int. Cl.: B60L 11/18, H02K 3/28, H02K 11/00

(54) **PROPULSION AND CHARGER SYSTEM FOR AN ELECTRIC VEHICLE**

(30) Priority: 08.10.2014 GB 201417794
(71) Applicant: Nissan Motor Manufacturing (UK) Limited, Cranfield, Bedfordshire MK43 0DB (GB)
(72) Inventor: Urquhart, Iain, Bedfordshire, MK43 0DB (GB); Greenough, Jim, Bedfordshire, MK43 0DB (GB); Zhu, Zi-Qiang, Sheffield, S1 3JD (GB)

(57) **Abstract**

A system for a grid-enabled vehicle comprising: a bi-directional DC energy source; an electric machine comprising a rotor and a stator, wherein the stator comprises a first field winding and a second field winding which are electromagnetically coupled; a first control circuit operatively connected to the first field winding, and including an input configured to be coupled to the grid; and a second control circuit operatively connected to the second field winding, and also coupled to the bi-directional DC energy source. The electric machine has two modes of operation: in a first mode of operation, the first control circuit energises the first field winding so as to supply power from the bi-directional DC energy source to the first field winding, and wherein the second control circuit energises the second field winding in synchrony with the first field winding so as to supply power from the bi-directional DC energy source to the second field winding; and, in a second mode of operation, the first control circuit energises the first field winding so as to supply power from the grid to the first field winding, and wherein the second field winding is energised by the first field winding so as to supply energy from the grid to the bi-directional energy source. The stator comprises a plurality of pole segments, each pole segment including a first pole tooth and a second pole tooth, wherein at least some of the pole segments carry a respective winding arrangement, and wherein the winding arrangement comprises a first field winding portion carried about the first pole tooth and a second field winding portion carried about the second pole tooth.

## Description

### Field of the invention

The invention relates to a system that combines the functionality of an electric drive and a battery charger. Such a system is suitable for use in electric vehicle applications.

### Background of the invention

Electrically driven passenger vehicles are gaining market share against conventional ICE-based passenger vehicles. However, there are several factors that limit the acceptance of electric vehicles by the public at large, for instance: the limited range of such vehicles and the range anxiety it induces in the consumer; consumer scepticism about the true environmental benefit of electric vehicles; availability of charging stations and speed of charging; and the high purchase-cost of such vehicles, to name a few examples.

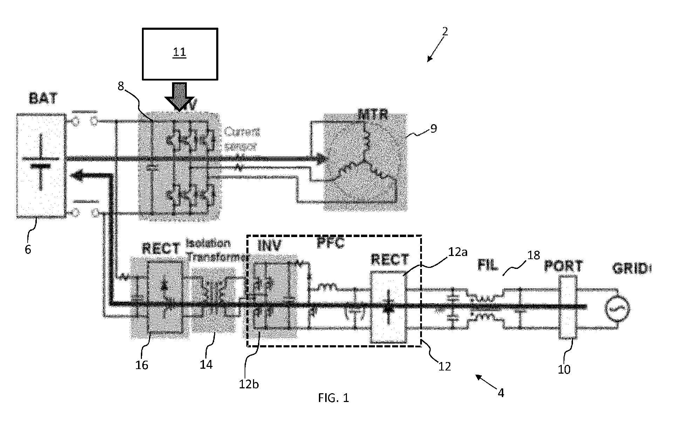

The high purchase-cost of electric vehicles is an important factor that limits large scale take-up and this cost is driven in large part by the complexity of the drive system. Consider a typical plug-in electric vehicle (PEV) or 'grid-enabled vehicle', as is shown schematically by way of example in Figure 1. As can be seen, the PEV shown here includes a traction system 2 and a charging system 4. Both of those systems are separate both functionally and electromechanically. It will be appreciated that other vehicle sub-systems aren't shown here for brevity.

In overview, the traction drive system 2 includes a high power battery pack 6, an electronic drive module 8 in the form of a DC/AC inverter, and an AC electric motor 9 - typically AC driven motors are used in EV applications. The battery pack supplies DC power to the inverter 8 which switches the supplied power under the control of inverter control means 11 into a suitable 3-phase AC power supply for the motor 9.

The charging system 4 includes a grid power input port 10, a PFC (power factor correction) module 12, a transformer 14 and a rectifier module 16. In a charging mode, the grid input power port 10 receives AC input power from the electrical grid which is then routed through a suitable filter 18 to the PFC module 12. As is known, the PFC module 12 functions to control the input power factor from the grid at unity and here includes an AC/DC rectifier 12a and a DC/AC inverter 12b in series. The output of the PFC module 12 feeds into the transformer 14 which supplies the rectifier module 16. The rectifier module 16 in turn converts the AC power input from the transformer 14 into a suitable voltage supply for the battery pack for the period of the charging cycle. Thus, the inverter 12b, which has an H-bridge topology, the transformer 14 and the rectifier 16 function as a DC-DC converter, whereby the inverter 12b is controlled by a battery controller (not shown) to generate a required charging voltage which is then switched across the transformer 14 and is then rectified back into DC by the rectifier 16.

The transformer 14 is an isolation transformer of a kind that will be familiar to the skilled reader, and is included to provide galvanic isolation (i.e. to eliminate direct electrical conduction paths) between the grid supply and any components that are connected to the vehicle chassis, such as the battery pack. This is a safety feature, to ensure that a user is not exposed to grid voltage in the case of a fault.

From the above brief overview of the typical components one might find in an electric vehicle, it is apparent that there are power electronic components that are common to the drive system 2 and the battery charging system 4. One approach taken to reduce the mass, complexity and cost of EV drive systems is to integrate the charging system and the electric motor which achieves a reduction in power electronic components. Two relatively early approaches are described in US patent application nos. US 5,341,075 to AC Propulsion, Inc. and US 5,099,186 to General Motors Corporation.

In US 5,341,075, an electric machine including a three-phase field winding may be operated both in a motor mode and in a charging mode. In a motor mode, the three phase windings of the machine are controlled by an inverter in order to generate torque on an output shaft of the motor. In the charging mode, two of the three phase windings are connected between an AC voltage source and the windings serve as inductive filtering elements. Drawbacks of this approach are that there is a risk of the AC grid supply being tied to the ground system of the vehicle, in addition to complex control and high levels of harmonic distortion.

In US 5,099,186 an electric machine is able to be operated in a motor mode or a charging mode. An AC source is connected to a neutral point of each of two sets of three-phase field windings of the machine such that the phase windings acts as the inductive elements of the charging circuit. In effect, two phases of the three-phase charging voltage are injected into the neutral points to establish a 'zero-phase' operation in which all of the phase windings are energised simultaneously. In theory, this means that the machine does not generate torque. However, in practice the structural and electrical differences between the phase windings means some torque is generated and this manifests as mechanical and electrical vibration and noise.

It is against this background that the invention has been devised.

### Summary of the invention

According to an aspect of the invention, there is provided a system for a grid-enabled vehicle comprising: a bi-directional DC energy source; an electric machine comprising a rotor and a stator, wherein the stator comprises a first field winding and a second field winding which are electromagnetically coupled; a first control circuit operatively connected to the first field winding, and including an input configured to be coupled to the grid; and a second control circuit operatively connected to the second field winding, and also coupled to the bi-directional DC energy source. The electric machine has two modes of operation: in a first mode of operation, the first control circuit energises the first field winding so as to supply power from the bi-directional DC energy source to the first field winding, and wherein the second control circuit energises the second field winding in synchrony with the first field winding so as to supply power from the bi-directional DC energy source to the second field winding; and, in a second mode of operation, the first control circuit energises the first field winding so as to supply power from the grid to the first field winding, and wherein the second field winding is energised by the first field winding so as to supply energy from the grid to the bi-directional energy source. The stator comprises a plurality of pole segments, each pole segment including a first pole tooth and a second pole tooth, wherein at least some of the pole segments carry a respective winding arrangement, and wherein the winding arrangement comprises a first field winding portion carried about the first pole tooth and a second field winding portion carried about the second pole tooth.

In one embodiment, the first and second field windings includes a polyphase arrangement, for example three phases, as is common in vehicle motor applications, although more or fewer phases are envisaged. Here, the first and second field winding portions may be associated with equivalent phases of the respective first and second field windings.

The side-by-side arrangement of the first field winding portion and the second field winding portion that share the magnetic material of a stator segment achieves a high coupling factor between the first and second field windings. Therefore, each of the first and second field windings works together during the first mode of operation to achieve a high torque density. In effect, therefore, the first and second field windings act as a single field winding, whatever the number of field winding phases, during the first mode of operation, and then act as a highly coupled isolation transformer during the second mode of operation to ensure efficient energy transfer through the machine.

In this arrangement, a section of the first field winding portion and a section of the second field winding portion lie adjacent to one another in an inter-tooth region of the stator segment. Although the portions may be insulated from one other by an airgap, in one embodiment an insulating member serves to separate the portions. Insulating material may also be applied to the pole teeth in order to avoid the field winding portions making a short circuit with the material of the stator tooth.

This insulating material may be a self-standing material, such as a tape or sheet that fits into the slot prior to winding, or it may be a suitably deposited insulating coating.

The pole teeth may be linked by a bridging piece. In one arrangement the bridging member forms an integral component with the first and second pole teeth.

The rotor includes a group of magnetic poles defined by an arrangement of permanent magnets housed internally within the rotor. In one embodiment, each one of the group of magnetic poles includes a first pair of elongate magnet members arranged in a V-formation. Such a formation benefits the focusing of flux in the airgap between the stator and rotor. Each one of the group of magnetic poles may includes a second pair of elongate magnet members arranged in a V-formation. The double-layer configuration improves the back EMF waveform that reduces the torque ripple during operation.

So as to ensure that the first and second field windings can serve as an isolation transformer without stepping the voltage up or down, it is preferred that the effective cross sectional area of the first winding portion is substantially equal to the effective cross sectional area of the second winding portion. This arrangement also has an advantage in the second mode of operation, or 'motoring mode', since the two phase windings act together to generate torque in the rotor and so should be driven with substantially equal current waveforms. Equal cross sectional areas of the first and second winding portions in the slot ensures that flux does not move between the coils which would reduce the effectiveness of the machine in the motoring mode.

### Brief description of the drawings

For a more detailed understanding of the invention, it will now be described by way of example with reference to the following drawings in which:
Figure 1 is a schematic view of a known vehicle system including a motor drive subsystem and a battery charging subsystem;
Figure 2 is a schematic view of a vehicle system that integrates motor drive and battery charging functions;
Figure 3 is a perspective view of an electric machine that is suitable for use within the system of Figure 2, including a stator, a rotor and a phase winding arrangement;
Figure 4 is an exploded perspective view of the electric machine of Figure 3;
Figure 5 is a perspective view of a longitudinal section through the electric machine of Figure 3;
Figure 6 is a view of a lateral section through the electric machine of Figure 3;
Figure 7 is an enlarged view of a quadrant of Figure 6;
Figure 8 is a perspective view, like that in Figure 3, but in which a section has been removed to show the internal structure of the machine;
Figure 9 is a perspective view, like that of Figure 3, of an alternative electric machine for use within the system of Figure 2, and in which a section has been removed to show the internal structure of the electric machine; and
Figure 10 is a cross section taken laterally through the electrical machine.

### Detailed description of the embodiments

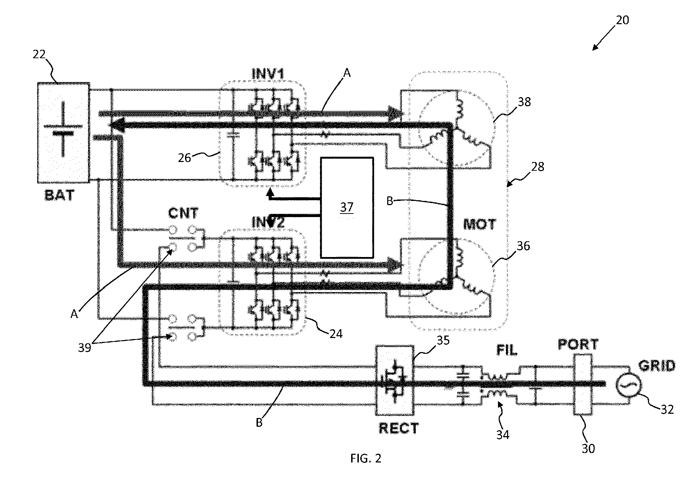

Figure 2 illustrates schematically an on-board electrical system 20 of a grid-enabled vehicle that integrates vehicle traction and also the functionality to charge the battery of the vehicle.

In overview the electrical system 20 comprises a bi-directional DC power source or 'battery' 22, a first power electronics module 24, a second power electronics module 26, an electric machine 28, and an electric grid input port 30.

The grid input port 30 is connectable to a power supply plug of a suitable grid power source 32 which may be a single-phase AC voltage source or a three-phase AC voltage source. The port 30 provides the appropriate physical form factor for connecting to a plug provided at a charging point, and such an interface is known generally in the art.

The port 30 links to the first power electronics module 24 through a charge input filter 34 and a rectifier 35. The charge input filter 34 comprises choke conductors to filter out line noise and interference from the electrical system 20 back into the grid during a charging period. The rectifier 35 comprises suitable electrical switches such as a full-wave bridge arrangement that rectifies the input AC grid power to provide a DC voltage to the first power electronics module 24.

Although the electric machine 28 is shown schematically in Figure 2, its structural configuration will be described in more detail later. For now, however, it should be noted that the electric machine 28 includes a first stator field winding/coil 36 and a second stator field winding/coil 38 that are arranged in the stator so as to be magnetically coupled but galvanically isolated. By virtue of this arrangement the electrical system 20 may be run in two modes: a drive mode and a charging mode. Electrical contacts 39 are provided to switch power supply to the first power electronics module 24 between the battery 22, during a driving mode, and the rectifier 35 during the charging mode.

In the drive mode, as indicated by the arrows labelled 'A' in Figure 2, power is supplied from the battery 22 to the electric machine 28 through both the first power electronics module 24 and the second power electronics module 26 which energise the first and second field windings 36,38. Here, therefore, it will be appreciated that both the first and second power electronic modules 24, 26 are driven as inverters to convert the DC power supplied from the battery 22 to AC power for the electric machine 28. The first and second field windings 36,38 thus act together, in synchrony, to generate a synchronised rotating electromagnetic field that, in turn, causes the electric machine 28 to act as a motor.

In the charge mode, as indicated by the arrow labelled 'B' in Figure 2, AC power is supplied by the grid input port 30, is converted to DC by the rectifier 35 and then is converted back into AC by the first power electronic module 24 from where it is supplied to the first field winding 36.The magnetic coupling between the first field winding 36 and the second field winding 38 induces an alternating magnetic field in the second field winding 38 which delivers energy to the second power electronic module 26. The second power electronic module 26 is driven as an active rectifier so as to convert the AC power generated by the second field winding 38 to DC power for supply to the battery 22. In this mode of operation, therefore, the first field winding 36 and second field winding 38 act as a transformer.

It will be appreciated from the above explanation that each of the first and second power electronics modules 24,26 is a three-phase active rectifier inverter that can be controlled to function either as an inverter, to convert DC power to AC power, or as an active rectifier to convert AC power to DC power. As shown in Figure 2, each of the power electronic modules 24,26 is controlled by a common power controller 37. Expressed another way, the first and second electronic modules 24,26 function as a dual-active bridge DC-DC converter in which the first and second field windings 36,38 of the electric machine 28 serve as the transformer of the device.

Each power electronics module 24,26 has the same circuit configuration and includes a three phase bridge set comprising six high speed power switches such as IGBTs, although it should be noted that other switching means such as MOSFETs may be used. Low pass filters are included on the DC side of the power electronics modules 24,26 in order to remove residual AC components on the converted DC voltage line. Such a configuration would be familiar to the skilled person.

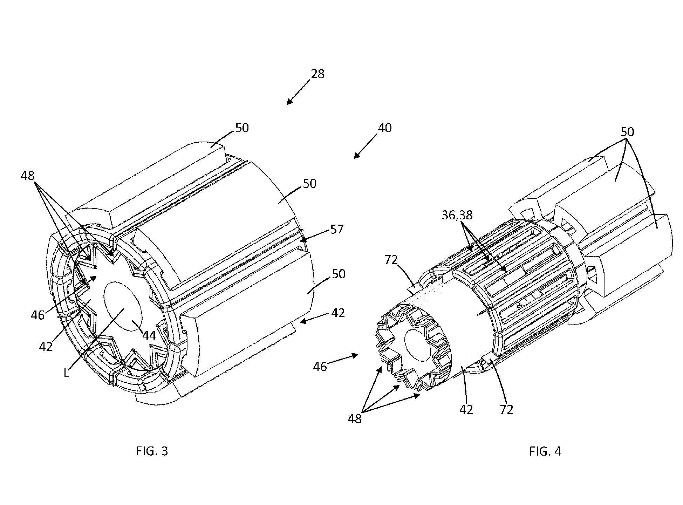

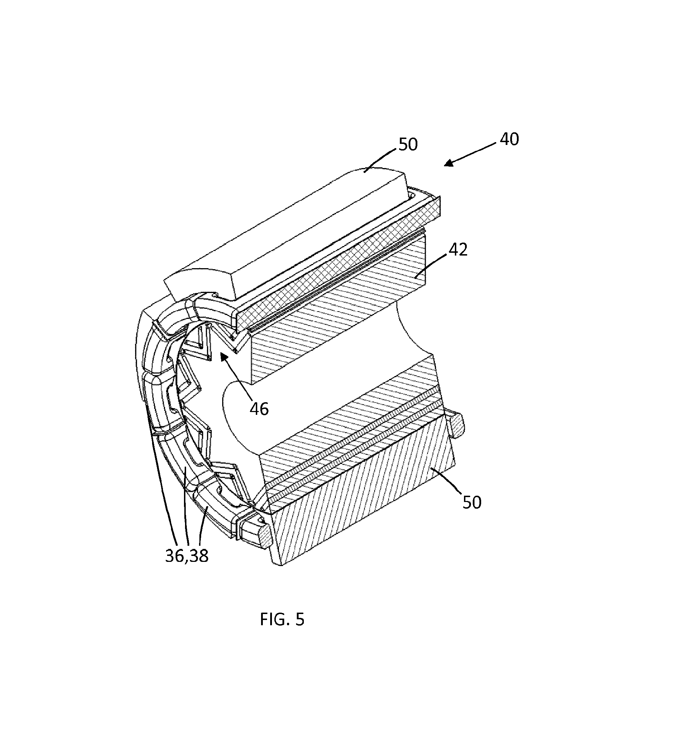

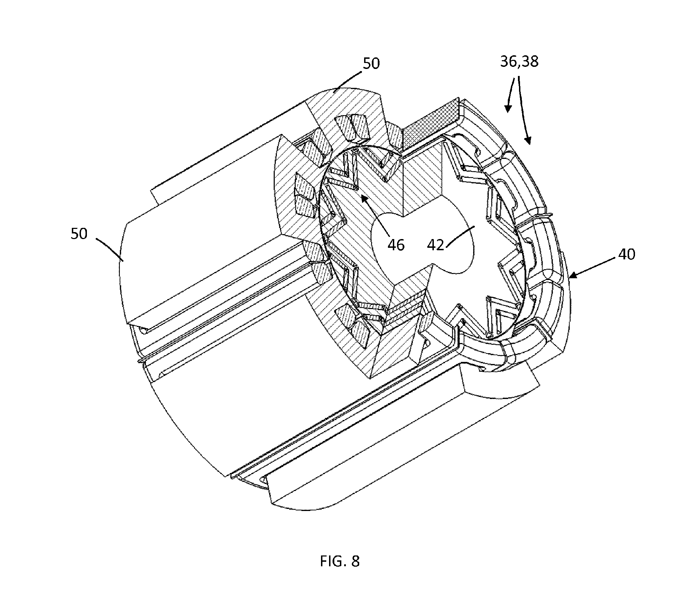

As shown schematically in Figure 2, the electric machine 28 includes first and second stator field coils or 'windings' 36,38. From the above explanation, it will be appreciated that in the charging mode of operation, the first field winding 36 and the second field winding 38 must be coupled electromagnetically in order to enable the energisation of the first field winding 36 to induce a charging waveform in the second field winding 38. The means by which the electromagnetic coupling between the first and second field windings 36,38 is accomplished will become apparent in the following explanation of the structural configuration of the electric machine 28, making reference to Figures 3 to 8 which show various views of the electric machine 28. As shown in Figure 2, each of the first and second field windings 36,38 has a polyphase arrangement and, more specifically, includes three respective phases or 'phase coils', which is typical in vehicle motor applications. However, the invention also applies to machines with more or fewer phase coils.

The electric machine 28 comprises a stator 40 arranged concentrically around a rotor 42 in the usual way. The rotor 42 includes a central bore 44 for housing a drive shaft and which defines a central longitudinal axis 'L' of the electric machine 28. Note that the drive shaft is not shown in the Figures.

Also, at this point it will be appreciated that certain features of the electrical machine 28 such as electrical connections, the main housing, rotor support bearings and the like are not shown here for clarity. Instead, the description focuses on the essential elements of the electric machine of the invention.

The rotor 42 is a cylindrical-shaped block of magnetically permeable material, such as iron or steel. Although not shown here, it is envisaged that the rotor 42 may be constructed from laminated plate sections, as is a known construction technique for magnetic cores and the like.

The rotor 42 includes a magnetic pole arrangement 46 having a plurality of magnetic poles 48, only three of which are labelled for clarity. In this embodiment, the magnetic pole arrangement 46 includes eight poles 48 that are formed by permanent magnets arranged internal to the rotor 42.

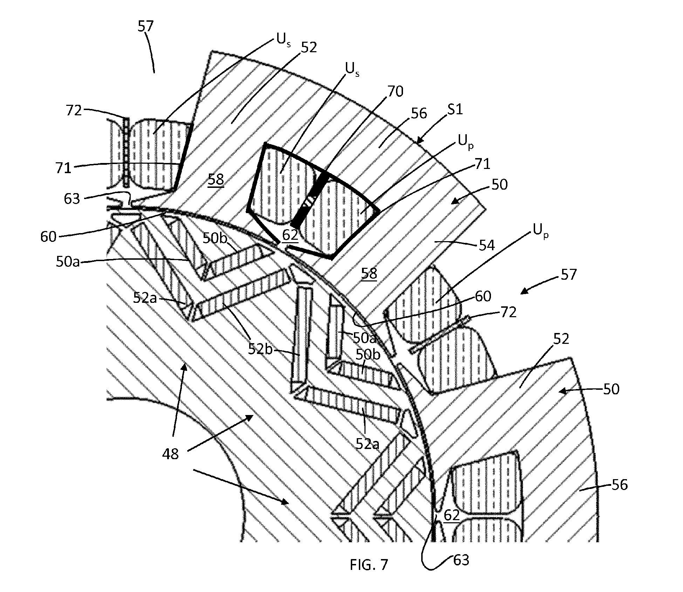

More specifically, and as shown most clearly in Figure 7, each pole 48 of the magnetic pole arrangement 46 includes a bar magnet formation comprising first and second magnet layers 50, 52 which are spaced in the radial direction. Each of the magnet layers 50,52 includes first and second elongate magnet members 50a,50b; 52a,52b that are arranged in a V-formation. The magnet members 52a,52b in the lower (radially more inwards) magnet layer are larger than those in the upper magnet layer 50. Beneficially, the double-layer magnet configuration improves the back EMF waveform that reduces the torque ripple during operation. Furthermore, the 'V-shaped' configuration benefits flux focussing and improves saliency which benefits the reluctance torque in operation of the machine.

Arranging the magnets inside the rotor 42 instead of mounted to its surface results in a robust magnet containment which enables high rotor speeds to be achieved. Also, such a configuration provides greater design flexibility in terms of magnet geometry which benefits flux linkage between the rotor 42 and the stator 40. For instance, the V-formation of the double-layer magnet formation concentrates flux at the air gap between the rotor 42 and the stator 40 and optimises the back EMF profile to reduce torque ripple of the electric machine 28 during the motoring mode of operation.

Although not shown here, the magnet formation may be skewed along the longitudinal axis at one or more points to reduce cogging torque.

Turning now to the stator 40, in this embodiment the stator 40 comprises a plurality of stator modules or 'segments' 50 that are spaced radially with respect to one another to form the stator 40. The stator segments 50 may be solid blocks of a suitable stator material, such as iron or steel, or may be built up from a stack of suitably shaped laminations.

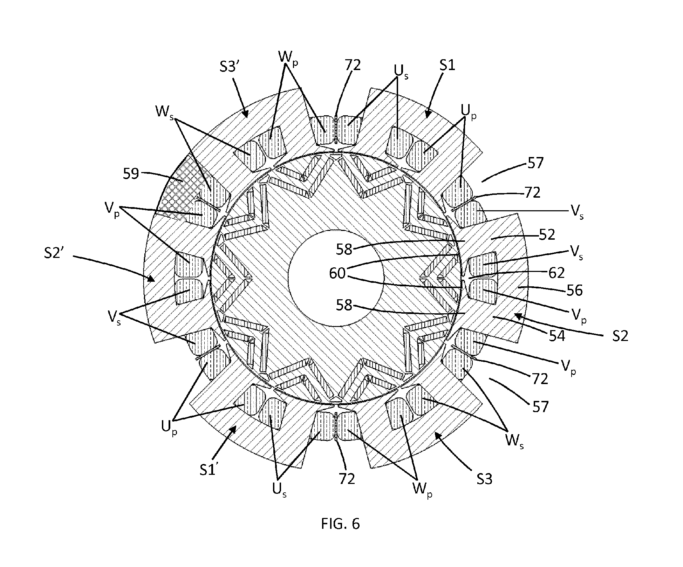

The stator segments 50 have a length that is comparable to the length of the rotor. However the shape of the stator segments 50 in cross section is perhaps viewed best in Figure 6 and 7. As can be seen, in cross section, each stator segments 50 is U-shaped to define a first pole tooth 52, a second pole tooth 54, each of the pole teeth being linked by a bridge member 56. As shown here the first and second pole teeth 52,54 converge towards one another as they extend radially inwards from the bridge member 56 towards the rotor 42. The thickness of the bridge member 56 is comparable to the thickness of the pole teeth 52,54 to support flux density through the stator segments 50.

It will be noted that the stator segments 50 are distributed circumferentially so that there is a gap 57 between them. The 'inter-segment' gaps or spaces 57 provide a region to accommodate sections of windings carried by the pole teeth 52,54 as will be described. In the figures, the inter-segment spaces 57 are empty. However, optionally the inter-segments spaces may accommodate material to support the structural integrity of the stator 40. This additional 'back-fill' material is indicated by way of example by the reference 59 in Figure 6. Preferably, the back fill material is rigid and has a low magnetic relative permeability (as close to µr=1 as is practical) such as aluminium or austenitic stainless steel, engineering plastics and the like, so as not to influence the magnetic flux present in the stator segments 50.

The ends of the first and second pole teeth 52,54 are flared to define pole ends 58 having a curved outer face 60. Taken together, the curved outer faces 60 of the pole ends 58 define the substantially cylindrical inner surface of the stator 40 for receiving the rotor 42. The width of the pole ends 58 is such as to define a gap 63 between it and the neighbouring pole end 58.

Between the first and second pole teeth 52,54 is an inter-tooth region 62 which provides a space to accommodate the windings that are carried on the pole teeth 52,54, as will be described.

The pole teeth 52,54 serve to carry the first and second field windings 36;38 which are distributed about the stator 40 so that a suitable rotating electromagnetic field can be generated, in use. In the Figures, the windings 36;38 are represented by solid conductor bars, largely for clarity purposes, although it should be appreciated that the conductor bars represent a physical set of wound wire elements, as is typical in motor applications for electromagnetic efficiency.

In this embodiment, since the first and second field windings are 3-phase, each field winding comprises three phase coils, each one representing one of the phases of the respective field winding. In turn, each of the phase coils comprises a pair of phase coil portions which are carried on a respective one of the pole teeth 52,54 of diametrically opposed stator segments 50.

So, for a single stator segment, one of the pole teeth 52,54 carries a phase coil portion of one phase coil of the first or second field windings 36,38 and the other of the pole teeth 52,54 carries a phase coil portion of a corresponding phase coil of the other of the first or second field windings 36,38. Therefore, when the electric machine 28 is in charging mode, as explained above, the phase coil portion on one of the pole teeth 52,54 of a stator segment 50 acts as the 'primary' coil and the other phase coil portion acts as the 'secondary' coil since the stator segment carries phase coil portions (or 'field winding portions) that are associated with equivalent phases of the first and second filed windings.

This is illustrated in Figures 6 and 7 in which the primary phase coil portion associated with the stator segment labelled as 'S1' is identified as 'U_{P}' and the secondary phase coil portion is identified as 'U_{S}'. Accordingly, the stator segment S1' diametrically opposite stator segment S1, carries the other phase coil portions Up,Us in the pair. The phase coil portions labelled as U_{P} may be considered to be the phase coil portions associated with the first field winding 36 and the phase coil portions labelled as U_{S} may be considered to be the phase coil portions associated with the second field winding 38.

Similarly, the stator segments labelled as S2 and S2' carry phase coil portions V_{P} associated with the first field winding 36 and phase coil portions V_{S} associated with the second field winding 38, and stator segments labelled S3 and S3' carry phase coil portions W_{P} associated with the first field winding 36 and phase coil portions W_{S} associated with the second field winding 38.

Configuring the stator segments 50 to each carry a phase coil portion of each of the first and second field windings 36,38 means that a section of the each of the phase coil portions is accommodated within the inter-tooth region 62 of the stator segments 50 which thereby provides a high magnetic coupling between the field windings and efficient energy transfer during a charging mode.

Note that the effective cross sectional area of the phase coil portions is substantially equal, that is to say a ratio of 1:1, which is significant when considering the role of the electrical machine as an isolation transformer in the charging circuit and as a motor. The number of turns in each of the winding portions must be equal in order to avoid net flux moving between the windings which would reduce the effectiveness of the machine.

To ensure that the electrical isolation between the phase coils carried on the stator segments 50 is robust, insulation material in the form of a slot liner member 70 may extend between the adjacent phase coils, as is shown by way of example on stator segment S1 in Figure 7. The slot liner member 70 backs up any electrically isolating coating applied to the windings and increases the reliability of the windings. However, if there is sufficient space in the inter-tooth region 62, an airgap may be established between adjacent phase coil portions which would also provide the necessary insulation. An airgap is shown in Figures 6 and 7 for the rest of the stator segments. Insulation material is also carried on the inner and outer surfaces of the segment to ensure that the phase coil portions are isolated from the magnetic material of the segments - this is indicated on Figure 7 by the reference '71'.

In addition to the slot liner member 70, insulating material in the form of a further slot liner member 72 is configured to extend between adjacent phase coils carried on neighbouring ones of the stator segments 50. The provision of insulation material provides good galvanic isolation between phase coils and is more reliable than providing a predetermined air gap.

The ends of the phase windings that extend outside of the stator may also be isolated by any suitable means. For example insulating tape material may be wrapped around each of the field windings, or the windings may be 'potted' in a suitable polymeric material.

The material for the slot liner members 70,72 may be any suitable material, but preferably are made of a polymeric material such as polyamides, resin-infused papers, of single or multi- layer construction. It is also possible for the slot liner members 70,72 and the insulating material 71 to be an insulating coating suitable deposited on the relevant surfaces of the segments 50. Similarly, an insulating coating could be deposited on the end windings where they are external to the stator

The machine topology described here provides significant advantages in the context of the dual function machine of the system of the invention. For example, the arrangement of the phase coil portions on adjacent pole teeth of a stator segment provides good isolation between the 'primary' and 'secondary' coils during the charging mode but still provides a high coupling factor between the first and second field windings by virtue of the fact that the segment is shared by the primary and secondary coils. A further advantage is that fault tolerance is improved. For example, if the power supply to one of the phase coil portions fails during the motor mode, the electric machine is still able to operable, albeit at a reduced level.

The skilled person would understand that various modifications may be made to the illustrated embodiments without departing from the inventive concept as defined by the claims.

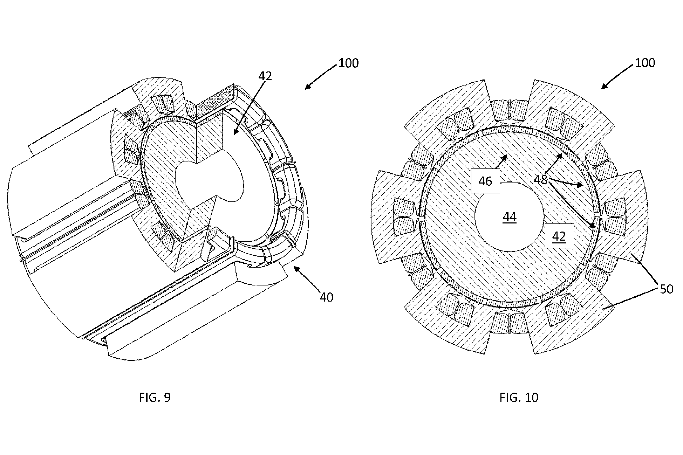

Figure 9 and 10 illustrate an alternative electric machine 100 which may be used in the system of Figure 2. The electric machine 100 is similar to the electric machine 28 that has been described above with reference to Figure 3 to 8 so only the differences will be described here. Where appropriate, the same reference numbers will be used to refer to the same or similar parts.

In this embodiment, the stator 40 is the same as in the previous embodiment. However, the rotor 42 is configured with an alternative magnetic pole arrangement 46 in which a plurality of magnetic poles 48 (two of which are labelled) are formed by permanent magnets coupled to the cylindrical outer surface of the rotor. Ten magnetic poles 48 are provided in this arrangement although the skilled person will understand that the rotor 42 may be configured to have a different number of magnetic poles 48.

Each of the magnetic poles 48 is substantially flat but has a slight curvature in cross section so as to match the corresponding region of the rotor 42 to which it is coupled. Physical attachment of the magnetic poles 48 to the rotor surface may be achieved by the use of suitable engineering adhesive, although other methods are envisaged, such as a band retention method. The precise method of attaching the magnets to the rotor 42 will depend on the proposed maximum rotational speed of the rotor in use.

## Claims

1. A system for a grid-enabled vehicle comprising:
a bi-directional DC energy source;
an electric machine comprising a rotor and a stator, wherein the stator comprises a first field winding and a second field winding which are electromagnetically coupled;
a first control circuit operatively connected to the first field winding, and including an input configured to be coupled to the grid;
a second control circuit operatively connected to the second field winding, and also coupled to the bi-directional DC energy source;
wherein the electric machine has two modes of operation;
in a first mode of operation, the first control circuit energises the first field winding so as to supply power from the bi-directional DC energy source to the first field winding, and wherein the second control circuit energises the second field winding in synchrony with the first field winding so as to supply power from the bi-directional DC energy source to the second field winding;
in a second mode of operation, the first control circuit energises the first field winding so as to supply power from the grid to the first field winding, and wherein the second field winding is energised by the first field winding so as to supply energy from the grid to the bi-directional energy source;
wherein the stator comprises a plurality of pole segments, each pole segment including a first pole tooth and a second pole tooth;
wherein at least some of the pole segments carry a respective winding arrangement, and wherein the winding arrangement comprises a first field winding portion carried about the first pole tooth and a second field winding portion carried about the second pole tooth.

2. The system of claim 1, wherein a section of the first field winding portion and a section of the second field winding portion lie adjacent to one another in an inter-tooth region of the stator segment.

3. The system of claim 2, wherein the adjacent sections of the first field winding portion and the second field winding portion are separated by an insulating member.

4. The system of claims 1 to 3, wherein the first field winding portion and the second field winding portion are insulated from from the respective pole teeth

5. The system of claims 1 to 4, wherein the first pole tooth and the second pole tooth are bridged by a bridging piece.

6. The system of claims 1 to 5, wherein the rotor includes a group of magnetic poles defined by an arrangement of permanent magnets housed internally within the rotor.

7. The system of claim 6, wherein each one of the group of magnetic poles includes a first pair of elongate magnet members arranged in a V-formation.

8. The system of claim 7, wherein each one of the group of magnetic poles includes a second pair of elongate magnet members arranged in a V-formation.

9. The system of claim 8, wherein the first pair of magnet first and the second pair of magnet members are arranged in respective radially spaced layers.

10. The system of claims 1 to 5, wherein the rotor includes a group of magnetic poles defined by an arrangement of permanent magnets arranged about an outer surface of the rotor.

11. The system of any of claims 1 to 10, wherein the first winding portion has an effective cross sectional area and wherein the second winding portion has an effective cross sectional area, and wherein the effective cross sectional area of the first winding portion is substantially equal to the effective cross sectional area of the second winding portion.

12. The system of any one of claims 1 to 11, wherein the first field winding is a polyphase arrangement and wherein the second field winding is a polyphase arrangement, and wherein the first and second field winding portions are associated with equivalent phases of the respective first and second field windings.

13. A system for a grid-enabled vehicle as hereinbefore described with reference to or as illustrated in the accompanying drawings
